# EUROPEAN PATENT APPLICATION

(11) **EP 4 610 475 A1**
(43) Date of publication of application: **03.09.2025**
(21) Application number: 23906365.4
(22) Date of filing: 24.08.2023
(51) Int. Cl.: F01N 3/20, B01D 53/94, F01N 3/021, F01N 3/08, F01N 3/28, F02D 9/04, F02D 41/06

(54) **DIESEL ENGINE**

(30) Priority: 20.12.2022 JP 2022203389
(71) Applicant: Kubota Corporation, Osaka 556-8601 (JP)
(72) Inventor: OKANO, Hiroaki, Sakai-shi, Osaka 592-8331 (JP); KATO, Daichi, Sakai-shi, Osaka 592-8331 (JP)
(74) Representative: Dolleymores
(86) International application number: PCT/JP2023/030516
(87) International publication number: WO 2024/134987

(57) **Abstract**

There is provided a diesel engine capable of exhaust purification by an SCR catalyst even during no-load or low-load operation without using large electric power. Under the control of the electronic control device, a temperature raising process of the SCR catalyst is started when a start condition that an SCR inlet-side exhaust temperature T4 of the SCR catalyst becomes equal to or lower than a predetermined low-temperature determination temperature TA is satisfied, the temperature raising process of the SCR catalyst is ended when an end condition that the SCR inlet-side exhaust temperature T4 of the SCR catalyst becomes equal to or higher than a predetermined SCR temperature raising end determination temperature TC is satisfied, and the temperature raising process of the SCR catalyst is resumed when the start condition is satisfied again. In the temperature raising process of the SCR catalyst, an opening degree of the exhaust throttle valve is reduced S2, and after-injection from the fuel injector is started S5 when a valve upstream-side exhaust temperature T0 of the exhaust throttle valve becomes equal to or higher than a predetermined after-injection permission temperature TB.

## Description

### TECHNICAL FIELD

The present invention relates to a diesel engine, and more particularly to a diesel engine capable of performing exhaust purification by an SCR catalyst even during no-load or low-load operation without using large electric power.

### BACKGROUND ART

Conventionally, there is an engine that activates an SCR catalyst by heating an electric heater and performs exhaust purification by the SCR catalyst when an exhaust temperature is low (see, for example, Patent Document 1).

### PRIOR ART DOCUMENT

### PATENT DOCUMENT

Patent Document 1: Japanese Patent Application Laid-open No. 2021-148068 (see Fig. 1)

### SUMMARY OF THE INVENTION

### PROBLEMS TO BE SOLVED BY THE INVENTION

<< Problem >> Large electric power is required.

In the engine of Patent Document 1, it is necessary to activate the SCR catalyst by heating the electric heater during no-load or low-load operation with a low exhaust temperature, and a large electric power is required.

In this case, problems such as rapid consumption of the battery and control failure of an engine ECU due to voltage drop of the battery occur.

An object of the present invention is to provide a diesel engine capable of performing exhaust purification by an SCR catalyst even during no-load or low-load operation without using large electric power.

### SOLUTIONS TO THE PROBLEMS

The main configuration of the present invention is as follows.

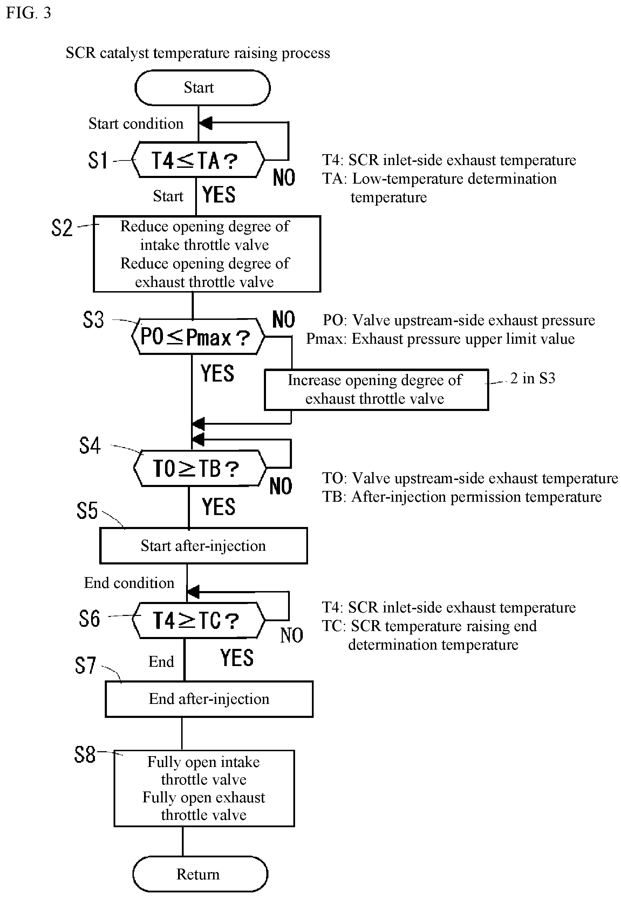

As shown in Fig. 3, under the control of an electronic control device (7), a temperature raising process of an SCR catalyst (3) is started when a start condition that an SCR inlet-side exhaust temperature (T4) of the SCR catalyst (3) becomes equal to or lower than a predetermined low-temperature determination temperature (TA) is satisfied, the temperature raising process of the SCR catalyst (3) is ended when an end condition that the SCR inlet-side exhaust temperature (T4) of the SCR catalyst (3) becomes equal to or higher than a predetermined SCR temperature raising end determination temperature (TC) is satisfied, and the temperature raising process of the SCR catalyst (3) is resumed when the start condition is satisfied again, and
in the temperature raising process of the SCR catalyst (3), an opening degree of an exhaust throttle valve (4) is reduced (S2), and an after injection from a fuel injector (6) is started (S5) when a valve upstream-side exhaust temperature (T0) of the exhaust throttle valve (4) becomes equal to or higher than a predetermined after-injection permission temperature (TB).

### EFFECTS OF THE INVENTION

The present invention has the following effects.

<< Effect 1 >> Exhaust purification can be performed by the SCR catalyst (3) even during no-load or low-load operation.

As illustrated in Fig. 3, in this engine, under the control of the electronic control device (7), when the SCR inlet-side exhaust temperature (T4) of the SCR catalyst (3) is equal to or lower than a predetermined low-temperature determination temperature (TA), the SCR temperature raising process is started, the exhaust temperature rises, the temperature of the SCR catalyst (3) also rises, and the SCR catalyst (3) can be activated. Therefore, exhaust purification by the SCR catalyst (3) becomes possible even during no-load or low-load operation.

<< Effect 2 >> It is not necessary to use large electric power for activation of the SCR catalyst (3).

As illustrated in Fig. 3, in the SCR temperature raising process, the opening degree of the exhaust throttle valve (4) is reduced (S2) and after injection is performed, and the exhaust temperature rises due to an increase in exhaust pressure and combustion of the after-injection fuel. Therefore, it is not necessary to use large electric power for activation of the SCR catalyst (3).

### BRIEF DESCRIPTION OF THE DRAWINGS

Fig. 1 is a schematic diagram of an engine according to a first embodiment of the present invention.
Fig. 2 is a schematic diagram of an exhaust guide path of the engine of Fig. 1.
Fig. 3 is a flowchart of an SCR catalyst temperature raising process of the engine of Fig. 1.
Fig. 4 is a flowchart of a DPF regeneration process of the engine in Fig. 1.
Figs. 5(A) and 5(B) are schematic diagrams of an exhaust guide path of an engine according to another embodiment of the present invention, in which Fig. 5(A) is of a second embodiment and Fig. 5(B) is of a third embodiment.
Figs. 6(A) and 6(B) are schematic diagrams of an exhaust guide path of an engine according to still another embodiment of the present invention, in which Fig. 6(A) is of a fourth embodiment, and Fig. 6(B) is of a fifth embodiment.

### EMBODIMENTS OF THE INVENTION

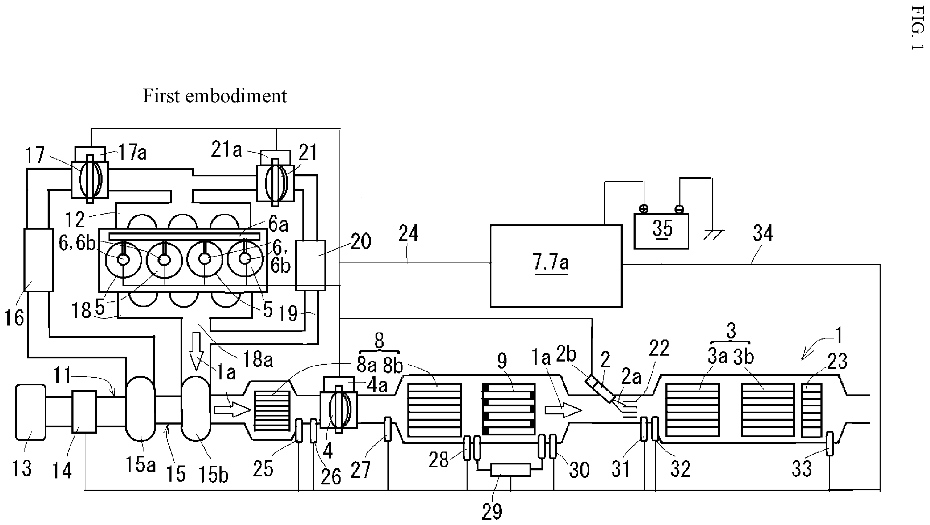

Figs. 1 to 6 are diagrams for describing an engine according to each embodiment of the present invention, and in each embodiment, an upright in-line multicylinder (four-cylinder) diesel engine will be described.

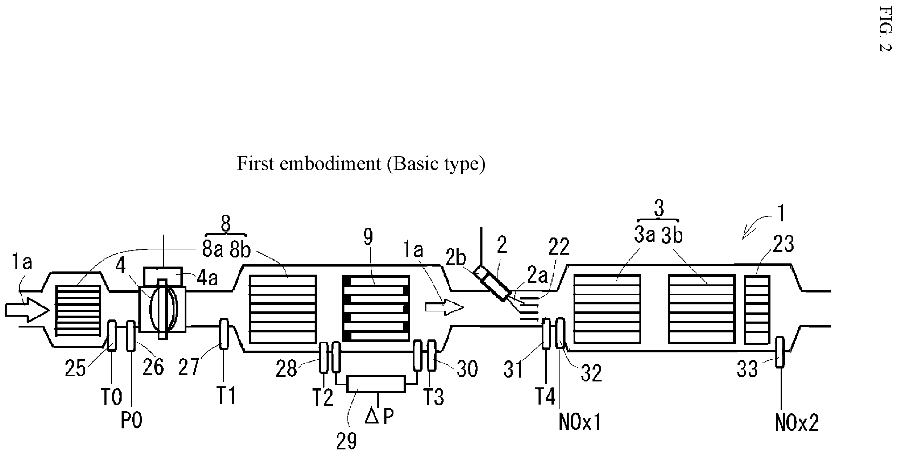

A first embodiment illustrated in Figs. 1 and 2 will be described.

As illustrated in Fig. 1, the engine includes an intake device, a fuel supply device, and an exhaust device.

The intake device includes an intake air introduction path (11) and an intake manifold (12) connected to a terminal end of the intake air introduction path (11). The intake air introduction path (11) includes an air cleaner (13), an intake flow meter (14), an air compressor (15a) of a supercharger (15), an intercooler (16), and an intake throttle valve (17) in order from an intake upstream side to an intake downstream side.

The fuel supply device is of a common rail type, and includes a common rail (6a) and a fuel injector (6) that injects fuel accumulated in the common rail (6a) into each combustion chamber (5).

As illustrated in Fig. 1, the exhaust device includes an exhaust manifold (18), an exhaust turbine (15b) of the supercharger (15) connected to an exhaust merging outlet (18a) of the exhaust manifold (18), an EGR path (19) led out from between the exhaust manifold (18) and the exhaust turbine (15b), and an exhaust guide path (1) led out from the exhaust outlet of the exhaust turbine (15b).

The EGR path (19) includes an EGR cooler (20) and an EGR valve (21) in order from the EGR upstream side to the EGR downstream side, and a lead-out end thereof is connected to the intake air introduction path (11) on the intake downstream side of the intake throttle valve (17).

EGR is an abbreviation of exhaust gas recirculation.

As shown in Figs. 1 and 2, the engine includes an exhaust guide path (1), the exhaust guide path (1) includes a urea water injector (2) and an SCR catalyst (3), and is configured such that nitrogen oxide in an exhaust (1a) is purified by the SCR catalyst (3) with a urea water (2a) added to the exhaust (1a).

As shown in Fig. 1, the engine includes an exhaust throttle valve (4) disposed in the exhaust guide path (1), a fuel injector (6) that injects fuel into a combustion chamber (5), and an electronic control device (7) that controls opening and closing of the exhaust throttle valve (4) and fuel injection from the fuel injector (6).

The SCR catalyst is an abbreviation of a selective catalytic reduction type catalyst, and the SCR catalyst (3) is an SCR catalyst obtained by loading a catalyst component on a flow-through honeycomb type catalyst carrier in which a large number of cells along an axial-length direction are arranged inside in a penetrating manner.

The urea water (2a) injected into the exhaust (1a) from the urea water injector (2) shown in Figs. 1 and 2 is hydrolyzed at a high temperature to become ammonia gas, and by the catalytic action of the SCR catalyst (3), ammonia reacts with nitrogen oxides (NO_{X}) in the exhaust (1a), and the nitrogen oxides (NO_{X}) are reduced to nitrogen (N₂), so that exhaust purification is performed.

An engine ECU (7a) is used as the electronic control device (7).

The ECU is an abbreviation of an electronic control unit, and a microcomputer is used.

As shown in Fig. 3, under the control of the electronic control device (7), the temperature raising process of the SCR catalyst (3) is started when a start condition that the SCR inlet-side exhaust temperature (T4) of the SCR catalyst (3) is equal to or lower than a predetermined low-temperature determination temperature (TA) is satisfied, the temperature raising process of the SCR catalyst (3) is ended when an end condition that the SCR inlet-side exhaust temperature (T4) of the SCR catalyst (3) is equal to or higher than a predetermined SCR temperature raising end determination temperature (TC) is satisfied, and the temperature raising process of the SCR catalyst (3) is resumed when the start condition is satisfied again.

In the temperature raising process of the SCR catalyst (3), when the opening degree of the exhaust throttle valve (4) is reduced (S2) and a valve upstream-side exhaust temperature (T0) of the exhaust throttle valve (4) becomes equal to or higher than a predetermined after-injection permission temperature (TB), the after-injection from the fuel injector (6) is started (S5).

As shown in Fig. 3, in this engine, under the control of the electronic control device (7), when the SCR inlet-side exhaust temperature (T4) of the SCR catalyst (3) is equal to or lower than a predetermined low-temperature determination temperature (TA), the SCR temperature raising process is started, the exhaust temperature rises, the temperature of the SCR catalyst (3) also rises, and the SCR catalyst (3) can be activated. Therefore, exhaust purification by the SCR catalyst (3) becomes possible even during no-load or low-load operation.

As shown in Fig. 3, in the SCR temperature raising process, the opening degree of the exhaust throttle valve (4) is reduced (S2) and after-injection is performed, and the exhaust temperature rises due to an increase in the exhaust pressure and combustion of the after-injection fuel. Therefore, it is not necessary to use large electric power for activation of the SCR catalyst (3).

In this engine, the low-temperature determination temperature (TA) illustrated in Fig. 3 is set to a temperature higher than the activation temperature of the SCR catalyst (3).

Therefore, in this engine, the SCR inlet-side exhaust temperature (T4) can be maintained at a temperature higher than the activation temperature of the SCR catalyst (3), and interruption of exhaust purification due to inactivation of the SCR catalyst (3) hardly occurs even during no-load or low-load operation.

The activation temperature of the SCR catalyst (3) is set to 180°C.

In this engine, after the SCR inlet-side exhaust temperature (T4) of the SCR catalyst (3) exceeds the activation temperature of the SCR catalyst (3) after the engine is started, the SCR inlet-side exhaust temperature (T4) of the SCR catalyst (3) is maintained at a temperature exceeding the activation temperature of the SCR catalyst (3) until the engine is stopped by the control of the electronic control device (7).

Therefore, in this engine, the exhaust purification of the SCR catalyst (3) can be performed over substantially the entire period of the engine operation except immediately after the engine start.

In this engine, the low-temperature determination temperature (TA) illustrated in Fig. 3 is desirably set to a temperature 30°C to 70°C both inclusive higher than the activation temperature of the SCR catalyst (3).

When the raising temperature of the low-temperature determination temperature (TA) is lower than 30°C which is the activation temperature of the SCR catalyst (3), there is a possibility that the SCR inlet-side exhaust temperature (T4) of the SCR catalyst (3) falls below the activation temperature of the SCR catalyst (3) during no-load or low-load operation, and interruption of the exhaust purification is likely to occur. When the raising temperature exceeds 70°C, there is a possibility that an unnecessary SCR temperature raising process is started although the SCR inlet-side exhaust temperature (T4) of the SCR catalyst (3) sufficiently exceeds the activation temperature of the SCR catalyst (3).

On the other hand, when the raising temperature of the low-temperature determination temperature (TA) is 30°C to 70°C both inclusive which is the activation temperature of the SCR catalyst (3), it is possible to avoid interruption of the exhaust purification and start of unnecessary SCR temperature raising process.

When the activation temperature of the SCR catalyst (3) is set to 180°C, a desirable range of the low-temperature determination temperature (TA) is 210°C to 250°C both inclusive.

In this engine, the SCR temperature raising end determination temperature (TC) illustrated in Fig. 3 is desirably set to a temperature 30°C to 70°C both inclusive higher than the low-temperature determination temperature (TA).

When the raising temperature of the SCR temperature raising end determination temperature (TC) is lower than 30°C which is the low-temperature determination temperature (TA), the SCR inlet-side exhaust temperature (T4) of the SCR catalyst (3) may fall below the activation temperature of the SCR catalyst (3) due to excessive heat radiation from the exhaust guide path (1) during no-load or low-load operation, and interruption of the exhaust purification is likely to occur. When the raising temperature exceeds 70°C, there is a possibility that the unnecessary SCR temperature raising process is continued although the SCR inlet-side exhaust temperature (T4) of the SCR catalyst (3) is sufficiently higher than the activation temperature of the SCR catalyst (3).

On the other hand, when the raising temperature of the SCR temperature raising end determination temperature (TC) is 30°C to 70°C both inclusive which is the low-temperature determination temperature (TA), it is possible to avoid interruption of the exhaust purification and continuation of the unnecessary SCR temperature raising process.

In a case where the desirable range of the low-temperature determination temperature (TA) is 210°C to 250°C both inclusive, the desirable range of the SCR temperature raising end determination temperature (TC) is 240°C to 320°C both inclusive.

As shown in Figs. 1 and 2, in this engine, the exhaust throttle valve (4) is disposed on the exhaust upstream side of the urea water injector (2) and the SCR catalyst (3).

Therefore, in this engine, the exhaust temperature of the path small volume portion located on the exhaust upstream side of the exhaust throttle valve (4) rapidly increases due to the reduction in the opening degree of the exhaust throttle valve (4), and the time when the valve upstream-side exhaust temperature (T0) reaches the after-injection permission temperature (TB) is shortened.

As shown in Figs. 1 and 2, the engine includes a DOC (8) on the exhaust upstream side of the urea water injector (2) and the SCR catalyst (3).

Therefore, in this engine, the DOC (8) optimizes the ratio of NO and NO₂ in the exhaust (1a), and the exhaust purification efficiency of the SCR catalyst (3) is increased.

As shown in Figs. 1 and 2, in the engine, the DOC (8) includes a valve upstream-side DOC (8a) disposed on the exhaust upstream side of the exhaust throttle valve (4).

Therefore, in this engine, the exhaust temperature of the small volume space on the exhaust upstream side of the exhaust throttle valve (4) rapidly increases due to the reduction in the opening degree of the exhaust throttle valve (4), and the valve upstream-side DOC (8a) quickly reaches the activation temperature.

As shown in Figs. 1 and 2, in the engine, the DOC (8) also includes a valve downstream-side DOC (8b) disposed on the exhaust downstream side of the exhaust throttle valve (4).

Therefore, in the engine, the DOC (8) is divided into the valve upstream-side DOC (8a) and the valve downstream-side DOC (8b), the valve upstream-side DOC (8a) can be downsized, and the valve upstream-side DOC (8a) quickly reaches the activation temperature.

The DOC is an abbreviation of a diesel oxidation catalyst, and the DOC obtained by loading a catalyst component on a flow-through honeycomb type catalyst carrier in which a large number of cells along the axial-length direction are arranged inside in a penetrating manner is used for both the valve upstream-side DOC (8a) and the valve downstream-side DOC (8b).

The valve upstream-side DOC (8a) and the valve downstream-side DOC (8b) have the same material and the same structure, but the valve upstream-side DOC (8a) has a smaller volume than the valve downstream-side DOC (8b) and has a higher temperature rise speed.

The activation temperature of the valve upstream-side DOC (8a) and the valve downstream-side DOC (8b) is set to 190°C.

The exhaust guide path (1) used in the engine of the first embodiment is in a basic form, and its overall structure is as follows.

As shown in Figs. 1 and 2, the exhaust guide path (1) includes various catalysts and various exhaust treatment components, and includes a valve upstream-side DOC (8a), an exhaust throttle valve (4), a valve downstream-side DOC (8b), a DPF (9), a urea water injector (2), a mixer (22), an upstream-side SCR catalyst (3a), a downstream-side SCR catalyst (3b), and an ASC (23) in order from the exhaust upstream side to the exhaust downstream side.

DPF is an abbreviation of diesel particulate filter, and captures PM in engine exhaust. PM is an abbreviation of particulate matter. In the DPF (9), a wall flow type ceramic honeycomb is used in which a large number of cells along the axial-length direction are arranged in parallel inside, and inlets and outlets of adjacent cells are alternately sealed.

The mixer disperses urea water in the exhaust, and the mixer (22) is configured by a plurality of parallel plates along the exhaust direction. The inlet of the mixer (22) is sprayed with urea water (2a) from the urea water injector (2).

The SCR catalyst (3) includes an upstream-side SCR catalyst (3a) and a downstream-side SCR catalyst (3b).

ASC is an abbreviation of ammonia slip catalyst, and is a catalyst that purifies ammonia slipped from the SCR catalyst. The ASC (23) is an ASC obtained by loading a catalyst component on a flow-through honeycomb type catalyst carrier in which a large number of cells along an axial-length direction are arranged inside in a penetrating manner.

As shown in Fig. 1, a valve actuator (4a) of the exhaust throttle valve (4) and a valve actuator (2b) of the electromagnetic valve of the urea water injector (2) are electrically connected to the engine ECU (7a) via an actuator harness (24) together with a valve actuator (17a) of the intake throttle valve (17), an actuator (6b) of the electromagnetic valve of the fuel injector (6), and a valve actuator (21a) of the EGR valve (21), and are supplied with power from a battery (35).

The exhaust guide path (1) shown in Figs. 1 and 2 includes various sensors, and includes, in order from the exhaust upstream side to the exhaust downstream side, a valve upstream-side exhaust temperature sensor (25) and a valve upstream-side exhaust pressure sensor (26) disposed between the valve upstream-side DOC (8a) and the exhaust throttle valve (4), a valve downstream-side DOC inlet-side exhaust temperature sensor (27) disposed between the exhaust throttle valve (4) and the valve downstream-side DOC (8b), a DPF inlet-side exhaust temperature sensor (28) disposed between the valve downstream-side DOC (8b) and the DPF (9), a differential pressure sensor (29) across the inlet side and the outlet side of the DPF (9), and a DPF outlet-side exhaust temperature sensor (30) disposed between the DPF (9) and the urea water injector (2), an SCR inlet-side exhaust temperature sensor (31) and an SCR upstream-side NOₓ sensor (32) disposed between the mixer (22) and the upstream-side SCR catalyst (3a), and an SCR downstream-side NOₓ sensor (33) disposed on the outlet side of the ASC (23).

The various sensors are electrically connected to the engine ECU (7a) via a sensor harness (34) together with the intake flow meter (14).

As shown in Fig. 2, the valve upstream-side exhaust temperature sensor (25) detects the valve upstream-side exhaust temperature (T0) of the exhaust throttle valve (4), the valve upstream-side exhaust pressure sensor (26) detects the valve upstream-side exhaust pressure (P0), the valve downstream-side DOC inlet-side exhaust temperature sensor (27) detects the valve downstream-side DOC inlet-side exhaust temperature (T1), the DPF inlet-side exhaust temperature sensor (28) detects the DPF inlet-side exhaust temperature (T2), the differential pressure sensor (29) detects the differential pressure (ΔP) between the DPF inlet side and the DPF outlet side, and the DPF outlet-side exhaust temperature sensor (30) detects the DPF outlet-side exhaust temperature (T3).

The SCR inlet-side exhaust temperature sensor (31) detects the SCR inlet-side exhaust temperature (T4), the SCR upstream-side NOₓ sensor (32) detects the SCR upstream-side NOₓ concentration (NO_{X}1), and the SCR downstream-side NOₓ sensor (33) detects the SCR downstream-side NOₓ concentration (NO_{X}2).

A control procedure of the SCR temperature raising process by the engine ECU (7a) will be described with reference to a flowchart of Fig. 3.

In step (S1), it is determined whether or not the start condition of the SCR temperature raising process, that is, the SCR inlet-side exhaust temperature (T4) has become the low-temperature determination temperature (TA) or lower. If the determination is negative, the determination in step (S1) is repeated. If the determination is affirmative, the opening degree of the intake throttle valve (17) and the opening degree of the exhaust throttle valve (4) are reduced in step (S2), and the process proceeds to step (S3).

In step (S3), it is determined whether or not the valve upstream-side exhaust pressure (P0) is equal to or lower than the exhaust pressure upper limit value (Pmax). When the determination is affirmative, the process proceeds to step (S4). When the determination is negative, the opening degree of the exhaust throttle valve (4) is increased in step (2 in S3), and then the process proceeds to step (S4).

In step (S4), it is determined whether or not the valve upstream-side exhaust temperature (T0) is equal to or higher than the after-injection permission temperature (TB). If the determination is negative, the determination in step (S4) is repeated. If the determination is affirmative, the after-injection is started in step (S5), and the process proceeds to step (S6). The after-injection permission temperature (TB) is a temperature lower than the low-temperature determination temperature (TA), for example, 150°C.

In step (S6), it is determined whether or not the end condition of the SCR temperature raising process, that is, the SCR inlet-side exhaust temperature (T4) is equal to or higher than the SCR temperature raising end determination temperature (TC). When the determination is negative, the determination in step (S6) is repeated. When the determination is affirmative, the after-injection is ended in step (S7), and the process proceeds to step (S8).

In step (S8), return to full-open of the intake throttle valve (17) and return to full-open of the exhaust throttle valve (4) are performed, and the process returns to step (S1).

In the exhaust purification treatment by the SCR catalyst (3), the engine ECU (7a) distributes the injection amount of the urea water (2a) from the urea water injector (2) according to the purification rate of NOx.

The purification rate of NOx is estimated by the engine ECU (7a) based on the SCR upstream-side NO_{X} concentration (NO_{X}1) and the SCR downstream-side NO_{X} concentration (NO_{X}2).

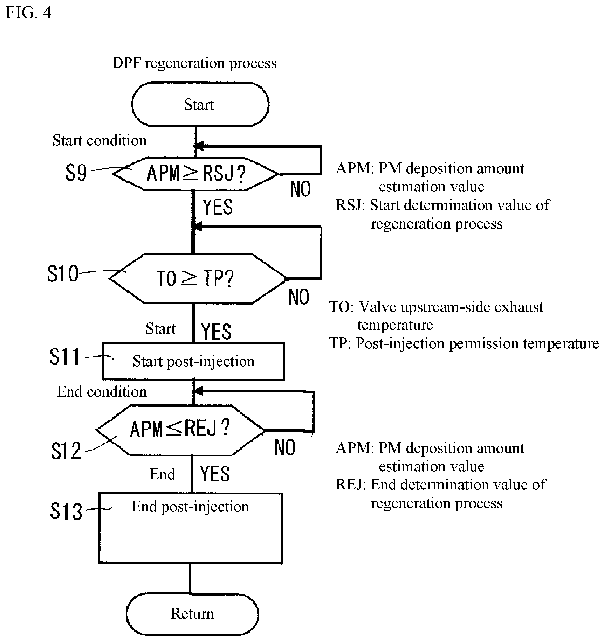

Next, a control procedure of the DPF regeneration process by the engine ECU (7a) will be described with reference to a flowchart of Fig. 4.

In step (S9), it is determined whether or not the start condition of the DPF regeneration process, that is, the PM deposition estimation value (APM) of the DPF (9) is equal to or greater than the start determination value (RSJ) of the regeneration process. When the determination is negative, the determination of step (S9) is repeated, and when the determination of step (S9) is affirmative, the process proceeds to step (S10).

The PM deposition estimation value (APM) in step (S9) is estimated by the engine ECU (7a) based on the differential pressure (ΔP) between the DPF inlet side and the DPF outlet side detected by the differential pressure sensor (29).

In step (S10), it is determined whether or not the valve upstream-side exhaust temperature (T0) is equal to or higher than the post-injection permission temperature (TP). When the determination is negative, the determination in step (S10) is repeated, and when the determination is affirmative, the process proceeds to step (S11).

The post-injection permission temperature (TP) is set to a temperature that exceeds the after-injection permission temperature (TB) and becomes equal to or higher than the activation temperature of the oxidation catalyst (8), for example, 200°C.

In step (S11), post-injection is started.

The post-injection is set so that the valve downstream-side DOC inlet-side exhaust temperature (T1) is maintained at 400°C or higher and 700°C or lower and the DPF inlet-side exhaust temperature (T2) is maintained at 550°C or higher and 700°C or lower. In particular, the DPF inlet-side exhaust temperature (T2) is desirably set to 700°C or lower in order to prevent abnormal combustion of the deposited PM.

In the post-injection, the post-injection fuel started to be injected into the combustion chamber in the expansion stroke or the exhaust stroke is catalytically combusted in the valve upstream-side DOC (8a) and the valve downstream-side DOC (8b), the temperature of the exhaust (1a) rises, and the PM accumulated in the DPF (9) is incinerated and removed.

In step (S12) following step (S11), it is determined whether or not the end condition of the DPF regeneration process, that is, the PM deposition estimation value (APM) of the DPF (9) has become equal to or less than the end determination value (REJ) of the regeneration process. When the determination is negative, the determination of step (S12) is repeated, and when the determination of step (S12) is affirmative, the process proceeds to step (S13).

In step (S13), the post-injection is ended, and the process returns to step (S9).

The end determination value (REJ) of step (S12) is estimated by the engine ECU (7a) based on the differential pressure (ΔP) between the DPF inlet side and the DPF outlet side detected by the differential pressure sensor (29).

The post-injection permission temperature (TP) illustrated in Fig. 4 is a determination temperature for the valve upstream-side exhaust temperature (T0) detected by the valve upstream-side exhaust temperature sensor (25). As illustrated in Fig. 2, the valve upstream-side exhaust temperature (T0) is detected by the valve upstream-side exhaust temperature sensor (25) and controlled by the engine ECU (7a).

The valve downstream-side DOC inlet-side exhaust temperature (T1) is controlled by the adjustment of the injection timing and the fuel injection amount by the engine ECU (7a) according to the valve upstream-side exhaust temperature (T0) detected by the valve upstream-side exhaust temperature sensor (25).

The DPF inlet-side exhaust temperature (T2) is detected by the DPF inlet-side exhaust temperature sensor (28), and is controlled by adjustment of an injection timing and a fuel injection amount by the engine ECU (7a).

In addition, when the DPF outlet-side exhaust temperature (T3) detected by the DPF outlet-side exhaust temperature sensor (30) becomes a temperature equal to or higher than a predetermined upper-limit temperature, the after-injection and the post-injection are urgently stopped by the control of the engine ECU (7a).

Types of injection performed during one combustion cycle from the fuel injector (6) include pre-injection (pilot injection), main injection, after-injection, and post-injection.

In a four-cycle engine, one combustion cycle includes an intake stroke, a compression stroke, an expansion stroke, and an exhaust stroke.

The pre-injection (pilot injection) is an injection for suppressing ignition delay of the main injection fuel, and is started during an intake stroke or a compression stroke.

The main injection is the main injection for obtaining the output and is started before the compression top dead center.

The after-injection is an injection for raising the temperature of the exhaust, and is started during the expansion stroke after the main injection.

The post-injection is an injection for raising the temperature of the exhaust, and is started during the expansion stroke after the after-injection. The post-injection may be started during the exhaust stroke.

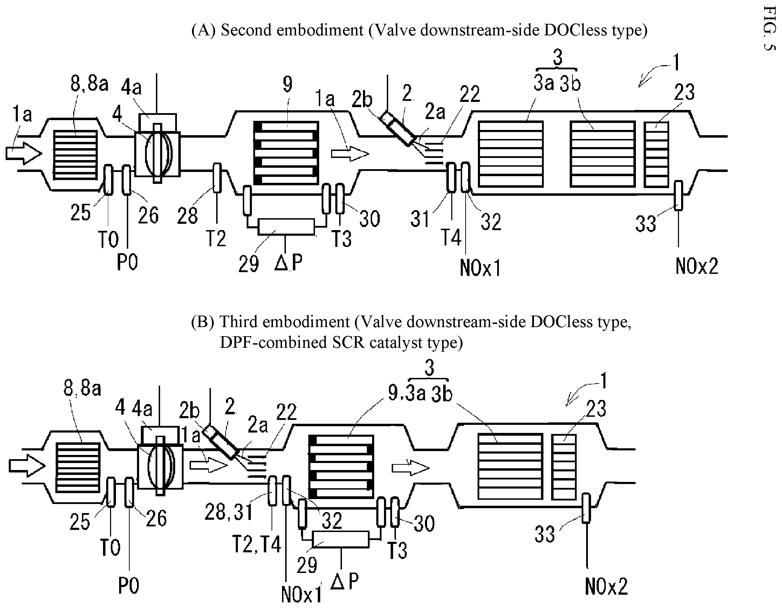

Next, an exhaust guide path (1) according to a second embodiment illustrated in Fig. 5 (A) and a third embodiment illustrated in Fig. 5 (B) will be described.

The exhaust guide paths (1) of the second embodiment and the third embodiment are of a valve downstream-side DOCless type in which the valve downstream-side DOC (8b) is removed from the basic type in Fig. 2, and the DOC (8) does not include the valve downstream-side DOC (8b) arranged on the exhaust downstream side of the exhaust throttle valve (4), and does not include the valve downstream-side DOC inlet-side exhaust temperature sensor (27).

In the second embodiment and the third embodiment, since there is no valve downstream-side DOC (8b), the exhaust guide path (1) is shorter than that of the first embodiment.

Further, the exhaust guide path (1) of the third embodiment shown in Fig. 5(B) is of a DPF-combined SCR catalyst type in which the upstream-side SCR catalyst(3a) is also used as the DPF (9), the SCR catalyst component is carried by the DPF(9) disposed on the exhaust downstream side of the urea water injector (2), and the DPF (9) also serves as the SCR catalyst (3).

In the third embodiment, since the DPF (9) also serves as the upstream-side SCR catalyst (3a), the exhaust guide path (1) is shorter than that of the second embodiment.

In the third embodiment, the SCR inlet-side exhaust temperature sensor (31) is also used as the DPF inlet-side exhaust temperature sensor (28), detects the SCR inlet-side exhaust temperature (T4) as the SCR inlet-side exhaust temperature sensor (31) during the SCR catalyst temperature raising process, and detects the DPF inlet-side exhaust temperature (T2) as the DPF inlet-side exhaust temperature sensor (28) during the DPF generation process.

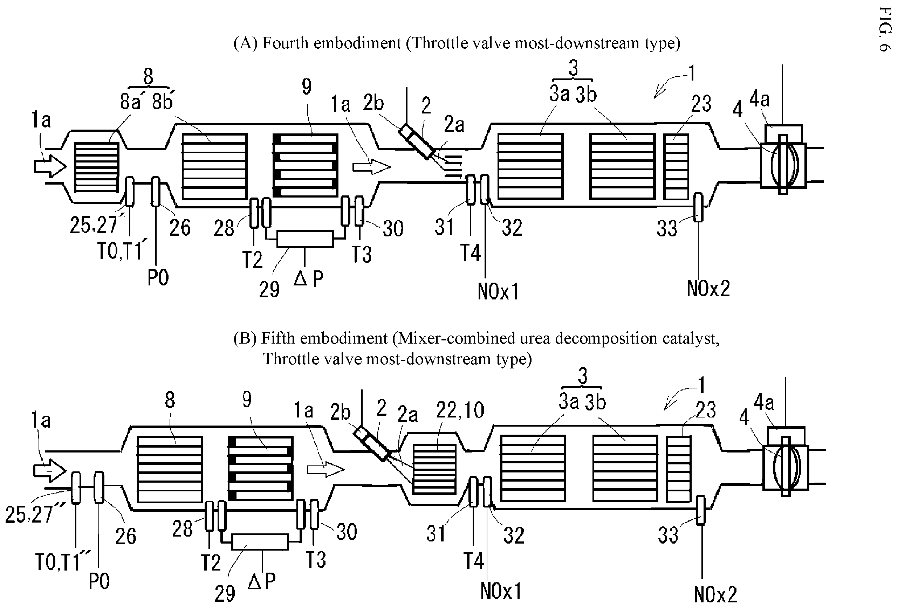

Next, exhaust guide paths (1) according to a fourth embodiment illustrated in Fig. 6(A) and a fifth embodiment illustrated in Fig. 6(B) will be described.

The exhaust guide paths (1) of the fourth embodiment and the fifth embodiment are of a throttle valve most-downstream type in which the exhaust throttle valve (4) is moved to the most-downstream side from the basic type in Fig. 2, and the exhaust throttle valve (4) is disposed on the exhaust outlet side of the ASC (23).

In the fourth embodiment and the fifth embodiment, the temperature rise of the SCR catalyst (3) is promoted by the increase in the exhaust pressure by the throttle of the exhaust throttle valve (4).

Further, in the fourth embodiment shown in Fig. 6(A), since the exhaust throttle valve (4) of the exhaust guide path (1) of the basic example moves from between the valve upstream-side DOC (8a) and the valve downstream-side DOC (8b) to the most downstream position, the valve upstream-side DOC (8a) and the valve downstream-side DOC (8b) of the basic example become the upstream-side DOC (8a)' and the downstream-side DOC (8b)', and the valve downstream-side DOC inlet-side exhaust temperature (T1) becomes the downstream-side DOC inlet-side exhaust temperature (T1)'.

In the fourth embodiment, the downstream-side DOC inlet-side exhaust temperature sensor (27)' is also used as the valve upstream-side exhaust temperature sensor (25), detects the valve upstream-side exhaust temperature (T0) as the valve upstream-side exhaust temperature sensor (25) before the after-injection or before the post-injection, and detects the downstream-side DOC inlet-side exhaust temperature (T1)' as the downstream-side DOC inlet-side exhaust temperature sensor (27)' after the post-injection.

The exhaust guide path (1) of the fifth embodiment shown in Fig. 6(B) is of a mixer-combined urea decomposition catalyst type including, between a urea water injector (2) and an SCR catalyst (3), a urea decomposition catalyst (10) also serving as a mixer (22) for dispersing the urea water (2a) in the exhaust (1a).

In the fifth embodiment, hydrolysis of urea is promoted, and exhaust purification by the SCR catalyst (3) is promoted.

As the mixer (22), a flow-through honeycomb type mixer in which a large number of cells along the axial-length direction are arranged inside in a penetrating manner is used.

In the exhaust guide path (1) of the fifth embodiment, the DOC (8) is used as a single body that is not divided into the upstream side and the downstream side, and the valve downstream-side DOC inlet-side exhaust temperature (T1) in the basic example is the DOC inlet-side exhaust temperature (T1)".

In the fifth embodiment, the DOC inlet-side exhaust temperature sensor (27)" is also used as the valve upstream-side exhaust temperature sensor (25), detects the valve upstream-side exhaust temperature (T0) as the valve upstream-side exhaust temperature sensor (25) before the after-injection or before the post-injection, and detects the DOC inlet-side exhaust temperature (T1)" as the DOC inlet-side exhaust temperature sensor (27)" after the post-injection.

The exhaust guide paths (1) of the second to fifth embodiments shown in Figs. 5(A) and 5(B) and Figs. 6(A) and 6(B) have the same configuration as the basic example except for the difference from the basic example of the first embodiment described above, are controlled by the flowchart of the basic example and the procedure according to the description, and have the same function as the basic example except for the functional difference caused by the structural difference from the basic example.

In Figs. 5(A) and 5(B) and Figs. 6(A) and 6(B), the same elements as those in Fig. 2 are denoted by the same reference numerals as those in Fig. 2.

### DESCRIPTION OF REFERENCE SIGNS

(1): Exhaust guide path
(1a): Exhaust
(2): Urea water injector
(2a): Urea water
(3): SCR catalyst
(3a): Upstream-side SCR catalyst
(3b): Downstream-side SCR catalyst
(4): Exhaust throttle valve
(5): Combustion chamber
(6): Fuel injector
(7): Electronic control device
(8): DOC
(8a): Valve upstream-side DOC
(8b): Valve downstream-side DOC
(9): DPF
(10): Urea decomposition catalyst

## Claims

1. A diesel engine comprising an exhaust guide path (1), the exhaust guide path (1) including a urea water injector (2) and an SCR catalyst (3), the exhaust guide path (1) being configured such that nitrogen oxide in exhaust (1a) is purified by the SCR catalyst (3) by urea water (2a) added to the exhaust (1a), the diesel engine comprising:
an exhaust throttle valve (4) of the exhaust guide path (1), a fuel injector (6) that injects fuel into a combustion chamber (5), and an electronic control device (7) that controls opening and closing of the exhaust throttle valve (4) and fuel injection from the fuel injector (6), wherein
under the control of the electronic control device (7), a temperature raising process of the SCR catalyst (3) is started when a start condition that an SCR inlet-side exhaust temperature (T4) of the SCR catalyst (3) becomes equal to or lower than a predetermined low-temperature determination temperature (TA) is satisfied, the temperature raising process of the SCR catalyst (3) is ended when an end condition that the SCR inlet-side exhaust temperature (T4) of the SCR catalyst (3) becomes equal to or higher than a predetermined SCR temperature raising end determination temperature (TC) is satisfied, and the temperature raising process of the SCR catalyst (3) is resumed when the start condition is satisfied again, and
in the temperature raising process of the SCR catalyst (3), an opening degree of the exhaust throttle valve (4) is reduced (S2), and after-injection from the fuel injector (6) is started (S5) when a valve upstream-side exhaust temperature (T0) of the exhaust throttle valve (4) becomes equal to or higher than a predetermined after-injection permission temperature (TB).

2. The diesel engine according to claim 1, wherein
the low-temperature determination temperature (TA) is set to a temperature higher than an activation temperature of the SCR catalyst (3).

3. The diesel engine according to claim 2, wherein
after the SCR inlet-side exhaust temperature (T4) of the SCR catalyst (3) exceeds the activation temperature of the SCR catalyst (3) after the engine is started, the SCR inlet-side exhaust temperature (T4) of the SCR catalyst (3) is maintained at a temperature exceeding the activation temperature of the SCR catalyst (3) until the engine is stopped by the control of the electronic control device (7).

4. The diesel engine according to claim 2, wherein
the low-temperature determination temperature (TA) is set to a temperature 30°C to 70°C both inclusive higher than the activation temperature of the SCR catalyst (3).

5. The diesel engine according to claim 4, wherein
the SCR temperature raising end determination temperature (TC) is set to a temperature 30°C to 70°C both inclusive higher than the low-temperature determination temperature (TA).

6. The diesel engine according to any one of claims 1 to 5, wherein
the exhaust throttle valve (4) is disposed on an exhaust upstream side of the urea water injector (2) and the SCR catalyst (3).

7. The diesel engine according to claim 6, further comprising
a DOC (8) on an exhaust upstream side of the urea water injector (2) and the SCR catalyst (3).

8. The diesel engine according to claim 7, wherein
the DOC (8) includes a valve upstream-side DOC (8a) disposed on an exhaust upstream side of the exhaust throttle valve (4).

9. The diesel engine according to claim 8, wherein
the DOC (8) also includes a valve downstream-side DOC (8b) disposed on an exhaust downstream side of the exhaust throttle valve (4).

10. The diesel engine according to claim 8, wherein
the DOC (8) does not include a valve downstream-side DOC (8b) disposed on an exhaust downstream side of the exhaust throttle valve (4).

11. The diesel engine according to any one of claims 1 to 5, wherein
an SCR catalyst component is carried by a DPF (9) disposed on an exhaust downstream side of the urea water injector (2), and the DPF (9) also serves as the SCR catalyst (3).

12. The diesel engine according to any one of claims 1 to 5, wherein
the exhaust throttle valve (4) is disposed on the exhaust downstream side of the SCR catalyst (3).

13. The diesel engine according to claim 12, further comprising
a urea decomposition catalyst (10) also serving as a mixer (22) for dispersing the urea water (2a) in the exhaust (1a) between the urea water injector (2) and the SCR catalyst (3).
